# FASCICULE DE BREVET EUROPEEN

(11) **EP 1 377 103 B1**
(45) Date de publication et mention de la délivrance du brevet: **18.11.2009**
(21) Numéro de dépôt: 03290882.4
(22) Date de dépôt: 09.04.2003
(51) Int. Cl.: H04W 72/12

(54) **Procédé et système de partage d'un abonnement entre une pluralité de terminaux de radiotéléphonie**
Verfahren und System zur Subskriptionsteilung zwischen mehreren Mobilfunktelefonendgeräten
Procedure and system for sharing a subscription among a plurality of radiotelephone terminals

(30) Priorité: 18.06.2002 FR 0207660
(43) Date de publication de la demande: 02.01.2004
(73) Titulaire: Société Française du Radiotéléphone-SFR, 75008 Paris (FR)
(72) Inventeur: Bensimon, Michael, 38100 Grenoble (FR); Caloud, Philippe, 38330 Saint Ismier (FR); Prunel, Nicolas, 38000 Grenoble (FR)
(74) Mandataire: Debay, Yves

(56) Documents cités:
- US-A- 5 986 574
- US-A- 6 115 613
- US-B1- 6 250 557

## Description

La présente invention concerne un procédé et un système de partage d'un abonnement entre une pluralité de terminaux de radiotéléphonie. Un numéro de téléphone unique est associé à cette pluralité de terminaux.

L'invention est particulièrement utile pour la gestion d'équipements situés à distance les uns des autres en des lieux ne disposant pas de réseau téléphonique filaire.

C'est le cas, par exemple, pour l'entreprise EDF, qui doit gérer des transformateurs dans toute la France. Le procédé selon l'invention permet, en attribuant un terminal à chaque transformateur du parc EDF, de transmettre par radiotéléphonie, par exemple à travers le réseau GSM, divers types de données de chaque terminal vers un unique centre de gestion, les données pouvant inclure, par exemple, la mesure à intervalles réguliers de différentes grandeurs physiques comme la puissance, la température, la pression, etc...

C'est aussi le cas de sociétés ayant une équipe de représentants, l'invention permettant de transmettre quasi instantanément les prises de commandes.

C'est encore le cas des services itinérants de vérifications ou de contrôle d'équipements, l'invention permettant à un employé d'effectuer les mesures, de les enregistrer sur son terminal, puis de les transmettre sans avoir à obtenir une communication avec quelqu'un du centre de gestion.

En général, un abonnement concerne une seule personne possédant un terminal radiotéléphonique, chaque terminal étant équipé d'une carte à puce, dite SIM, qui comprend toutes les données concernant l'abonné. Un numéro d'appel, dit MSISDN, et une identité internationale du terminal, dit IMEI, sont associés à chaque terminal. Une identité internationale d'abonné, dite IMSI, est associée à l'abonné.

Précisons qu'un terminal peut présenter trois états distincts :
- connecté au réseau radiotéléphonique,
- déconnecté du réseau radiotéléphonique,
- en train démettre (et donc également connecté au réseau radiotéléphonique).

Il est connu par la demande de brevet européen EP 0 711 090 un système permettant à une pluralité d'utilisateurs possédant un terminal GSM de partager le même abonnement. Une unique identité IMSI est attribuée à tous les terminaux des utilisateurs. En revanche, chaque terminal dispose d'une IMEI propre. Ainsi, chaque utilisateur est identifiable par une combinaison des identités IMSI et IMEI. Plusieurs des utilisateurs partageant plusieurs cartes SIM avec le même abonnement peuvent alors utiliser leurs cartes SIM en même temps. Si quelqu'un cherche à joindre l'un des utilisateurs partageant ledit abonnement, cette personne va se voir proposer une liste des différents utilisateurs partageant l'abonnement et devra choisir l'utilisateur à qui il destine l'appel afin d'être mis en communication avec lui. Ce système est prévu pour une utilisation familiale. Un inconvénient de ce système est qu'il est contraignant dans le cas de grandes sociétés, car il sera nécessaire de choisir un utilisateur parmi une liste importante d'utilisateurs. Un autre inconvénient de ce système est que chaque terminal est contraint d'envoyer, à chaque mise en marche et à chaque transmission, un message d'identification comprenant les identités IMEI et IMSI pour permettre une identification de l'émetteur. Or, la véritable identification d'un émetteur est faite grâce à l'IMSI (qui a une correspondance directe avec le numéro MSISDN), et l'emploi de l'IMEI comme identificateur contraint à réaliser des filtrages, ce qui alourdit beaucoup le procédé. Un inconvénient supplémentaire de ce système est une complexification de la gestion du système. En effet, les alarmes générées lors de l'usage de cartes SIM jumelles, et permettant à la fois d'identifier ces cartes SIM jumelles et de détecter les cartes SIM jumelles pirates qui ne sont pas clonées correctement, deviennent une source de pollution des centres de supervision dès lors que les cartes SIM jumelles pirates sont correctement clonées. Il est alors nécessaire de trouver un autre moyen de détection des cartes SIM pirates, ce qui complexifie le système.

Il est également connu par le document US 6 115 613 un système de radio télécommunication, et plus particulièrement, une méthode et un système pour permettre à une pluralité d'utilisateurs de téléphones portables de partager un abonnement commun qui inclut certaines limitations aux services disponibles aux membres du groupe d'utilisateurs du téléphone portable partageant cet abonnement. Mais un tel service est adapté seulement pour une utilisation familiale ou pour les petites entreprises dont chacune peut constituer un groupe ayant une pluralité de membres.

Un premier but de l'invention est de proposer un procédé pour permettre le partage d'un seul abonnement à un réseau radiotéléphonique, mutualisé entre une pluralité de terminaux radiotéléphoniques, sans nécessité de transmission de l'identité du terminal à chaque émission.

Ce but est atteint par un procédé de partage d'un abonnement entre une pluralité de terminaux équipés de moyens de radiotéléphonie, caractérisé en ce qu'il comprend une première étape de partage d'un temps d'accès à un réseau radiotéléphonique, dans le cadre de l'abonnement, en créneaux horaires, par un gérant, et d'attribution, par le gérant, de créneaux horaires spécifiques à chaque terminal, les créneaux horaires attribués aux différents terminaux ne se chevauchant pas, une deuxième étape d'émission d'un ou plusieurs serveurs de synchronisation vers chaque terminal, des créneaux horaires spécifiques à chaque terminal, et une troisième étape de stockage des créneaux horaires spécifiques dans une mémoire de chaque terminal auquel lesdits créneaux horaires ont été attribués.

Selon une autre particularité, la mémoire de chaque terminal est une carte SIM.

Selon une autre particularité, le procédé comprend une étape de synchronisation, à intervalles définis, de l'horloge de chaque terminal avec celle des serveurs de synchronisation et de mémorisation des données d'horloge dans la mémoire du terminal.

Selon une autre particularité, l'étape de synchronisation consiste en l'émission, d'un ou plusieurs serveurs de synchronisation vers chaque terminal, d'un message de synchronisation contenant la date et l'heure de l'horloge du ou des serveurs de synchronisation, puis d'une étape de traitement de ce message par les circuits de chaque terminal et le programme pour mettre à jour l'horloge de chaque terminal,

Selon une autre particularité, l'étape de synchronisation consiste en la mise à jour des horloges des serveurs de synchronisation et de chaque terminal à partir de systèmes GPS connectés aux serveurs de synchronisation et à chaque terminal.

Selon une autre particularité, le procédé comprend une étape de connexion de chaque terminal au réseau radiotéléphonique, déclenchée par une portion de programme de veille de chaque terminal, lorsque ledit terminal est dans un créneau horaire qui lui est attribué.

Selon une autre particularité, le procédé comprend une étape de déconnexion de chaque terminal du réseau radiotéléphonique à la fin du créneau horaire qui lui est attribué, déclenchée par une portion de programme de veille de chaque terminal.

Selon une autre particularité, le procédé comprend une étape de transmission de données, par le réseau radiotéléphonique, de chaque terminal vers un ou plusieurs serveurs applicatifs, lorsque ledit terminal est dans un créneau horaire où il est connecté au réseau radiotéléphonique, les données contenant les données de l'horloge et des grandeurs physiques, mesurées ou introduites à intervalles déterminés par des moyens de mesure ou d'introduction.

Selon une autre particularité, le procédé comprend une étape de synchronisation de chaque serveur applicatif avec les serveurs de synchronisation grâce à l'envoi d'un message de synchronisation des serveurs de synchronisation vers chaque serveur applicatif.

Selon une autre particularité, le procédé comprend une étape de contact de chaque terminal par au moins un serveur de synchronisation ou un serveur applicatif dans le créneau horaire qui est attribué audit terminal, consistant en l'émission d'un message comprenant de nouveaux créneaux horaires et/ou une nouvelle information de synchronisation, ou permettant l'activation de l'échange de données entre ledit terminal et le serveur applicatif.

Selon une autre particularité, le procédé comprend, lorsqu'un terminal est dans un créneau horaire où il est connecté au réseau radiotéléphonique, une étape de demande de temps d'émission de données par ledit terminal à au moins un serveur de synchronisation, suivie d'une étape d'attribution d'un temps d'émission, audit terminal par le serveur de synchronisation pour échanger des données avec au moins un serveur applicatif, le temps d'émission de données utilisant un deuxième abonnement.

Selon une autre particularité, le procédé comprend, lorsqu'un terminal est dans un créneau horaire où il est connecté au réseau radiotéléphonique, une étape d'attribution d'un temps d'émission obligatoire de données par au moins un serveur de synchronisation audit terminal, pour que ledit terminal échange des données avec au moins un serveur applicatif,

Un autre but de l'invention est de proposer un système pour mettre en oeuvre le procédé selon l'invention.

Ce but est atteint par un système, caractérisé en ce qu'il comprend au moins un serveur de synchronisation et un serveur applicatif, le serveur de synchronisation étant relié à un réseau de radiotéléphonie et comprenant au moins des moyens informatiques permettant la gestion et la définition d'un temps d'accès à un réseau radiotéléphonique par une pluralité de terminaux de radiotéléphonie, des moyens d'émettre, à destination de chaque terminal partageant le même abonnement, les données définissant les créneaux horaires qui lui ont été attribués et une mémoire permettant l'enregistrement de créneaux horaires attribués à chaque terminal, et le serveur applicatif comprenant au moins des moyens informatiques permettant la gestion de données émises par chaque terminal et une mémoire permettant l'enregistrement de ces données.

Selon une autre particularité, le serveur de synchronisation est confondu avec le serveur applicatif.

Selon une autre particularité, chaque terminal de radiotéléphonie comprend des moyens d'émission de données mémorisées dans une mémoire dudit terminal, représentant des grandeurs physiques mesurées à intervalles déterminés par des moyens de mesure reliés audit terminal, ainsi que des moyens d'émission d'une date et d'une heure.

Selon une autre particularité, tous les terminaux ont une carte SIM identique.

Selon une autre particularité, chaque terminal est connectable à un système de synchronisation de type GPS.

D'autres particularités et avantages de la présente invention apparaîtront plus clairement à la lecture de la description ci-après faite en référence aux dessins annexés, dans lesquels :
- la figure 1 représente le schéma d'un mode de mise en oeuvre du procédé selon l'invention,
- la figure 2 représente le schéma de principe du procédé selon l'invention.

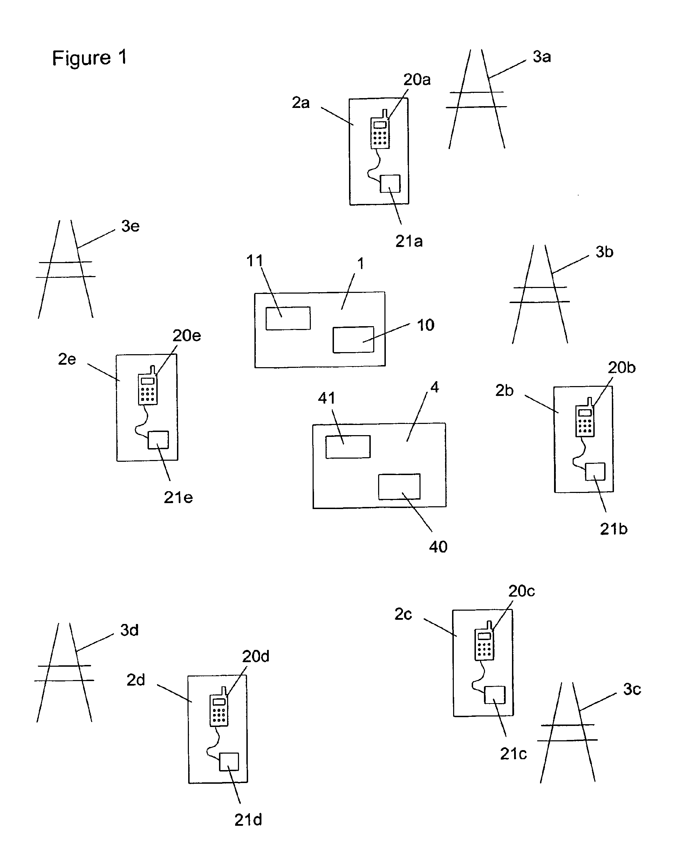

Comme le montre la figure 1, le procédé selon l'invention s'applique à une pluralité de terminaux (20a, ..., 20e) auxquels sont attribués le même numéro de téléphone MSISDN, la même identité IMSI et la même clé d'authentification Ki. Un unique abonnement est partagé entre les différents terminaux (20a, ..., 20e). Chaque terminal concerné comprend une carte SIM pourvue des mêmes informations d'abonnement. Selon le mode de réalisation de la figure 1, chaque terminal équipe un équipement (2a, ..., 2e) de mesure ou de contrôle, cet équipement étant, par exemple, un transformateur EDF. Chaque équipement (2a, ..., 2e) comprend un groupement (21a, ..., 21e) de moyens de mesure de différentes grandeurs physiques comme, par exemple, la puissance, la température et la pression atmosphérique. Les moyens de mesure de chaque groupement (21a, ..., 21e) sont, par exemple, un wattmètre, un thermomètre et un baromètre. Les données mesurées à intervalles déterminés par chaque groupement (21a, ..., 21e) de moyens de mesure sont enregistrées dans la mémoire ou la carte SIM de chaque terminal (20a, ..., 20e).

Notons que, sur la figure 1, ne sont représentés que cinq équipements (2a, 2b, 2c, 2d, 2e). L'invention peut toutefois s'appliquer à un nombre beaucoup plus important d'équipements.

Un ensemble de créneaux horaires de connexion au réseau central radiotéléphonique est attribué à chaque terminal (20a, ..., 20e) par un ou plusieurs serveurs de synchronisation (1). Le fait qu'un seul serveur de synchronisation (1) soit représenté sur la figure 1 ne doit nullement être considéré comme limitatif. Cet ensemble de créneaux horaires est différent pour chaque terminal (20a, ..., 20e), de telle façon que les différents créneaux horaires des différents terminaux (20a, ..., 20e) ne se chevauchent pas. Chaque créneau horaire attribué à chaque terminal (20a, ..., 20e) est enregistré sur la carte SIM du terminal (20a, ..., 20e) correspondant. Chaque terminal (20a, ..., 20e) ne peut donc se connecter au réseau téléphonique que pendant les créneaux horaires qui lui sont attribués. Ces créneaux horaires sont de préférence transmis à chaque terminal par le serveur de synchronisation (1) le plus proche dudit terminal lors d'une première communication établie par ledit serveur de synchronisation avec le terminal. Pour éviter le chevauchement des créneaux horaires de plusieurs terminaux (20a, ..., 20e), il est nécessaire que la date et l'heure de tous les terminaux soient les mêmes à un delta près.

Chaque serveur de synchronisation (1) comprend au moins un microprocesseur (10), une mémoire (11) et des moyens d'interface homme-machine. Le microprocesseur (10) du serveur de synchronisation (1) permet en particulier, par l'exécution d'un programme et les moyens d'interface du serveur de synchronisation (1), d'attribuer et de gérer les créneaux horaires des différents terminaux (20a, ..., 20e). L'ensemble des créneaux horaires attribués à chaque terminal (20a, ..., 20e) sont enregistrés dans la mémoire (11) du serveur de synchronisation (1). Seuls les créneaux horaires attribués aux terminaux les plus proches gérés par un certain serveur de synchronisation peuvent être enregistrés dans la mémoire (11) dudit serveur de synchronisation (1) si un serveur central gère la correspondance entre les différents terminaux et le serveur de synchronisation avec lequel ils communiquent.

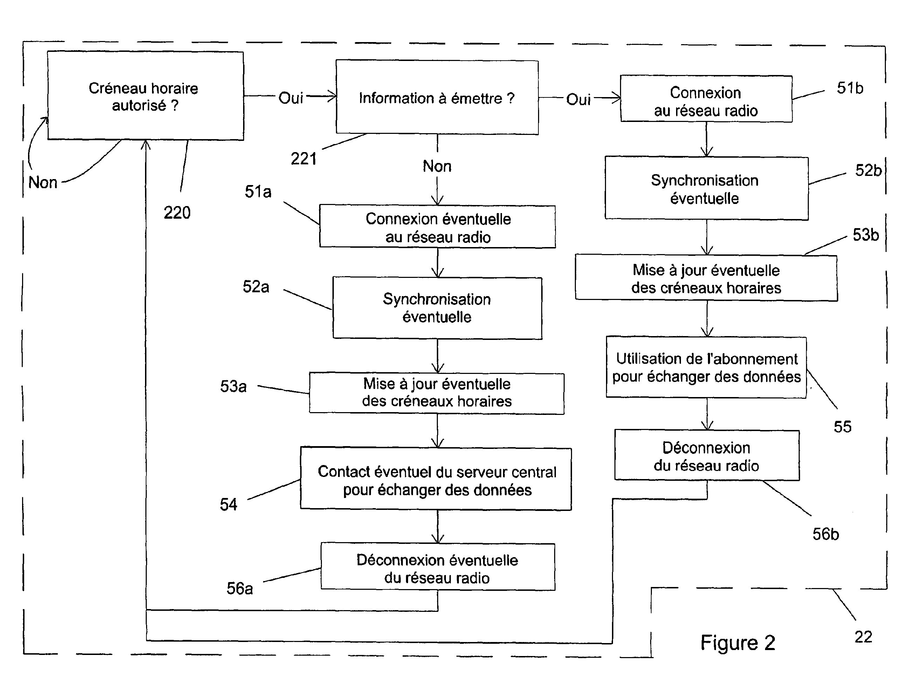

Lorsqu'un terminal (20a, ..., 20e) entre dans un créneau horaire qui lui est attribué, son programme de veille détecte le début du créneau horaire et se connecte au réseau radiotéléphonique (51a, 51b), comme le montre la figure 2, par exemple en rendant son interface radiotéléphonique active. Ledit terminal (20a, ..., 20e) peut alors émettre des données vers un ou plusieurs serveurs applicatifs (4) en utilisant l'abonnement partagé selon l'invention (55). Les données sont émises par chaque terminal à travers un réseau radiotéléphonique cellulaire, par exemple le réseau GSM, vers la station terrestre de base (3a, ..., 3e) la plus proche de chaque terminal. Les données sont ensuite transmises par ladite station terrestre de base (3a, ..., 3e) à travers le réseau téléphonique filaire vers le(s) serveurs applicatifs (4), chargés de collecter les données. Le fait qu'un seul serveur applicatif (4) soit représenté sur la figure 1 ne doit nullement être considéré comme limitatif. Le ou les serveurs applicatifs (4) peuvent être confondus avec le ou les serveurs de synchronisation (1). Chaque serveur applicatif (4) comprend au moins un microprocesseur (40), une mémoire (41) et des moyens d'interface homme-machine. Le microprocesseur (40) du serveur applicatif (4) permet en particulier, par l'exécution d'un programme et les moyens d'interface du serveur applicatif (4), de gérer les données reçues des différents terminaux (20a, ..., 20e). La mémoire (41) du serveur applicatif (4) permet d'enregistrer ces données. La mémoire (41) du serveur applicatif (4) comprend également les créneaux horaires attribués à chaque terminal, qui sont mis à jour à intervalles déterminés par le(s) serveur(s) de synchronisation (1).

Les données émises par un terminal (20a, ..., 20e) vers le(s) serveur(s) applicatif(s) (4) contiennent au moins les grandeurs physiques mesurées, ainsi que la date et l'heure d'émission. Les données de date et d'heure d'émission permettent au microprocesseur (40) du (des) serveur(s) applicatif(s) (4), en consultant la mémoire (41), d'identifier le terminal (20a, ..., 20e) qui a émis les données. Dans une variante de l'invention, le terminal (20a, ..., 20e) est identifié par son identifiant IMEI ou par tout autre identifiant.

Lorsqu'un terminal (20a, ..., 20e) est connecté au réseau radiotéléphonique, le(s) serveur(s) de synchronisation (1) peut (peuvent) envoyer audit terminal (20a, ..., 20e) un message contenant la date et l'heure présentes afin que ledit terminal actualise l'enregistrement de la date et de l'heure présentes à la place de la date et de l'heure enregistrées précédemment, et synchronise son horloge (52a, 52b). Le(s) serveur(s) de synchronisation (1) envoie (envoient) le même message au(x) serveur(s) applicatif(s) (4) afin que ce(s) dernier(s) synchronise(nt) également son (leurs) horloge(s). En effet, il est important que tous les terminaux, le(s) serveur(s) de synchronisation et le(s) serveur(s) applicatif(s) soient aux mêmes date et heure pour éviter le chevauchement des créneaux horaires des différents terminaux (20a, ..., 20e) et pour que les serveurs de synchronisation (1) et les serveurs applicatifs (4) puissent contacter les différents terminaux sans avoir à utiliser un identifiant du terminal, mais uniquement les créneaux horaires. Or, l'horloge de chaque terminal (20a, ..., 20e) et serveur (1, 4) peut connaître une dérive par rapport à la date et à l'heure des autres terminaux (20a, ..., 20e) et serveurs (1, 4). Par ailleurs, pour optimiser l'abonnement, il est nécessaire que les créneaux horaires attribués aux différents terminaux (20a, ..., 20e) s'enchaînent les uns après les autres. La plage d'erreur sur l'heure actualisée correspond à la durée d'aller-retour du message.

Dans une variante de l'invention, chaque terminal (20a, ..., 20e), ainsi que chaque serveur (1, 4), est relié à un système GPS qui fournit à la fois une position absolue avec une précision de l'ordre de 10 m, et une donnée de temps avec la précision de la microseconde. Chaque système GPS reçoit, en effet, ces informations de satellites comprenant un oscillateur fournissant une fréquence calibrée sur des horloges atomiques. Dans cette variante, les horloges de chaque terminal (20a, ..., 20e) et du chaque serveur (1, 4) sont régulièrement mises à jour à l'aide du système GPS. Les serveurs de synchronisation (1) n'ont alors pas besoin d'actualiser la date et l'heure de chaque terminal (20a, ..., 20e) et de chaque serveur applicatif (4).

Dans le cas où la synchronisation entre deux terminaux (20a, ..., 20e) n'est pas parfaite, ces deux terminaux (20a, ..., 20e) peuvent être connectés en même temps au réseau radiotéléphonique et émettre en même temps, hormis s'ils sont dans la même cellule de commutation de routage. En revanche, deux terminaux ne peuvent pas être joints en même temps. Ainsi, lorsque deux terminaux (20a, ..., 20e) émettent des données en même temps, le(s) serveur(s) de synchronisation (1) synchronise(nt) les horloges de ces deux terminaux au moins et met(tent) éventuellement à jour leurs créneaux horaires. Dans ce cas, le(s) serveur(s) de synchronisation (1) envoie(nt), avec le message de synchronisation et de mise à jour des créneaux horaires, un identifiant des terminaux concernés, par exemple leur IMEI, afin que chacun des terminaux reconnaisse le message qui lui est attribué, chaque terminal possédant ce dit identifiant enregistré dans sa mémoire ou sa carte SIM.

Lorsqu'un terminal (20a, ..., 20e) est connecté au réseau radiotéléphonique, le(s) serveur(s) de synchronisation (1) peut (peuvent) envoyer audit terminal (20a, ..., 20e) une mise à jour de l'ensemble des créneaux horaires (53a, 53b) correspondant audit terminal, dans le cas où une modification de cet ensemble de créneaux horaires a été effectuée par un gérant de l'installation.

Le programme (22) du terminal (20a, ..., 20e) comporte une boucle de veille (220) du terminal qui détecte l'entrée dans un créneau horaire autorisé. Le programme (22) inspecte les zones mémoires du terminal (20a, ..., 20e) ou de la carte SIM pour déterminer, par un test (221), s'il y a une information à émettre.

Dans la négative, le programme (22) se poursuit par une étape de synchronisation éventuelle (52a) et une étape de mise à jour éventuelle (53a) des créneaux horaires d'émission. Avant l'étape de déconnexion (56a), le programme (22) peut permettre une étape de contact (54) du ou des serveurs de synchronisation ou applicatifs (1, 4) avec le terminal (20a, ..., 20e) pour que ceux-ci émettent vers le terminal (20a, ..., 20e) des données destinées à l'application connectée du terminal (20a, ..., 20e) radiotéléphonique.

Dans l'affirmative, le programme (22) se poursuit par une étape (52b) de synchronisation éventuelle de l'horloge et une étape (53b) de mise à jour éventuelle des créneaux horaires d'émission du terminal (20a, ..., 20e). Le terminal (20a, ..., 20e) est alors autorisé à émettre (55) des données vers le ou les serveurs applicatifs (4). Chaque serveur de synchronisation ou applicatif (1, 4) peut également, lors de l'étape (55), émettre vers le terminal (20a, ..., 20e), avant l'étape de déconnexion (56b), des données destinées à l'application connectée du terminal radiotéléphonique.

Lorsqu'un terminal (20a, ..., 20e) sort d'un créneau horaire qui lui est attribué, son programme de veille détecte la fin du créneau horaire et se déconnecte du réseau radiotéléphonique (56a, 56b), comme le montre la figure 2, par exemple en rendant son interface radiotéléphonique inactive.

Les serveurs de synchronisation ou applicatifs (1, 4) peuvent contacter un terminal (20a, ..., 20e) qui est connecté, mais qui n'est pas en train d'émettre, par exemple pour réaliser la mise à jour de l'horloge ou des créneaux horaires dudit terminal (20a, ..., 20e), demander audit terminal (20a, ..., 20e) une confirmation de l'absence de données à émettre, ou encore mettre à jour un logiciel.

Dans une variante de l'invention, deux abonnements sont utilisés au lieu d'un seul. Cette variante est utile dans le cas où le volume des données à échanger est important. Le premier abonnement n'est utilisé que pour la synchronisation et la mise à jour des créneaux horaires des terminaux (20a, ..., 20e). Lorsqu'un terminal est connecté au réseau radiotéléphonique pendant un créneau horaire qui lui est attribué, ledit terminal peut demander au(x) serveur(s) de synchronisation (1), par l'intermédiaire d'un message de droit d'émission, de lui attribuer un temps d'émission vers le ou les serveurs applicatifs (4) afin d'échanger des données, par exemple par un mécanisme de jeton (token). Le ou les serveurs de synchronisation (1) peuvent également commander audit terminal de prendre ce temps d'émission vers le ou les serveurs applicatifs (4) afin d'échanger des données. Le message de droit d'émission peut, par exemple, comprendre le numéro du serveur applicatif (4) à contacter. L'échange de données avec le ou les serveurs applicatifs (4) se fera alors à l'aide du deuxième abonnement. L'usage d'un système à deux abonnements permet, d'une part, de diminuer les risques d'émission simultanée par plusieurs terminaux et, d'autre part, d'augmenter le nombre de périodes de temps pendant lesquelles un terminal peut potentiellement être joint ou émettre.

Précisons que lorsqu'un terminal est connecté au réseau radiotéléphonique, un utilisateur de ce terminal peut appeler une autre personne physique à l'aide dudit terminal, par exemple pour transmettre de vive voix les données collectées.

Il doit être évident, pour les personnes versées dans l'art, que la présente invention permet des modes de réalisation sous de nombreuses autres formes spécifiques, sans l'éloigner du domaine d'application de l'invention comme revendiqué. Par conséquent, les présents modes de réalisation doivent être considérés à titre d'illustration, mais peuvent être modifiés dans le domaine défini par la portée des revendications jointes, et l'invention ne doit pas être limitée aux détails donnés ci-dessus.

## Revendications

1. Procédé de partage d'un abonnement entre une pluralité de terminaux (20a, ..., 20e) équipés de moyens de radiotéléphonie, **caractérisé en ce qu'**il comprend une première étape de partage d'un temps d'accès à un réseau radiotéléphonique, dans le cadre de l'abonnement, en créneaux horaires, par un gérant, et d'attribution, par le gérant, de créneaux horaires spécifiques à chaque terminal (20a, ..., 20e), les créneaux horaires attribués aux différents terminaux (20a, ..., 20e) ne se chevauchant pas, une deuxième étape d'émission (53a, 53b) d'un ou plusieurs serveurs de synchronisation (1) vers chaque terminal (20a, ..., 20e), des créneaux horaires spécifiques à chaque terminal (20a, ..., 20e), et une troisième étape de stockage des créneaux horaires spécifiques dans une mémoire de chaque terminal (20a, ..., 20e) auquel lesdits créneaux horaires ont été attribués.

2. Procédé selon la revendication 1, **caractérisé en ce que** la mémoire de chaque terminal (20a, ..., 20e) est une carte SIM.

3. Procédé selon une des revendications 1 ou 2, **caractérisé en ce qu'**il comprend une étape de synchronisation (52a, 52b), à intervalles définis, de l'horloge de chaque terminal (20a, ..., 20e) avec celle des serveurs de synchronisation (1) et de mémorisation des données d'horloge dans la mémoire du terminal (20a, ..., 20e).

4. Procédé selon la revendication 3, **caractérisé en ce que** l'étape de synchronisation (52a, 52b) consiste en l'émission, d'un ou plusieurs serveurs de synchronisation (1) vers chaque terminal (20a, ..., 20e), d'un message de synchronisation contenant la date et l'heure de l'horloge du ou des serveurs de synchronisation (1), puis d'une étape de traitement de ce message par les circuits de chaque terminal (20a, ..., 20e) et le programme pour mettre à jour l'horloge de chaque terminal (20a, ..., 20e).

5. Procédé selon la revendication 3, **caractérisé en ce que** l'étape de synchronisation (52a, 52b) consiste en la mise à jour des horloges des serveurs de synchronisation (1) et de chaque terminal (20a, ..., 20e) à partir de systèmes GPS connectés aux serveurs de synchronisation (1) et à chaque terminal (20a, ..., 20e).

6. Procédé selon une des revendications 1 à 5, **caractérisé en ce qu'**il comprend une étape de connexion (51a, 51 b) de chaque terminal (20a, ..., 20e) au réseau radiotéléphonique, déclenchée par une portion de programme de veille de chaque terminal (20a, ..., 20e), lorsque ledit terminal (20a, ..., 20e) est dans un créneau horaire qui lui est attribué.

7. Procédé selon la revendication 6, **caractérisé en ce qu'**il comprend une étape de déconnexion (56a, 56b) de chaque terminal (20a, ..., 20e) du réseau radiotéléphonique à la fin du créneau horaire qui lui est attribué, déclenchée par une portion de programme de veille de chaque terminal (20a, ..., 20e).

8. Procédé selon une des revendications 3 à 7, **caractérisé en ce qu'**il comprend une étape de transmission de données (54, 55), par le réseau radiotéléphonique, de chaque terminal (20a, ..., 20e) vers un ou plusieurs serveurs applicatifs (4), lorsque ledit terminal (20a, ..., 20e) est dans un créneau horaire où il est connecté au réseau radiotéléphonique, les données contenant les données de l'horloge et des grandeurs physiques, mesurées
ou introduites à intervalles déterminés par des moyens de mesure ou d'introduction (21 a, ..., 21 e).

9. Procédé selon une des revendications 7 ou 8, **caractérisé en ce qu'**il comprend une étape de synchronisation de chaque serveur applicatif (4) avec les serveurs de synchronisation (1) grâce à l'envoi d'un message de synchronisation des serveurs de synchronisation (1) vers chaque serveur applicatif (4).

10. Procédé selon une des revendications 7 à 9, **caractérisé en ce qu'**il comprend une étape de contact (54) de chaque terminal (20a, ..., 20e) par au moins un serveur de synchronisation (1) ou un serveur applicatif (4) dans le créneau horaire qui est attribué audit terminal (20a, ..., 20e), consistant en l'émission d'un message comprenant de nouveaux créneaux horaires et/ou une nouvelle information de synchronisation, ou permettant l'activation de l'échange de données entre ledit terminal et le serveur applicatif (4).

11. Procédé selon une des revendications 6 ou 7, **caractérisé en ce qu'**il comprend, lorsqu'un terminal (20a, ..., 20e) est dans un créneau horaire
où il est connecté au réseau radiotéléphonique, une étape de demande de temps d'émission de données par ledit terminal à au moins un serveur de synchronisation (1), suivie d'une étape d'attribution d'un temps d'émission, audit terminal par le serveur de synchronisation (1) pour échanger des données avec au moins un serveur applicatif (4), le temps d'émission de données utilisant un deuxième abonnement.

12. Procédé selon une des revendications 6 ou 7, **caractérisé en ce qu'**il comprend, lorsqu'un terminal (20a, ..., 20e) est dans un créneau horaire
où il est connecté au réseau radiotéléphonique, une étape d'attribution d'un temps d'émission obligatoire de données par au moins un serveur de synchronisation (1) audit terminal, pour que ledit terminal échange des données avec au moins un serveur applicatif (4).

13. Système permettant la mise en oeuvre du procédé selon l'invention, **caractérisé en ce qu'**il comprend au moins un serveur de synchronisation (1) et un serveur applicatif (4), le serveur de synchronisation (1) étant relié à un réseau de radiotéléphonie et comprenant au moins des moyens informatiques (10) permettant la gestion et la définition d'un temps d'accès à un réseau radiotéléphonique par une pluralité de terminaux (20a, ..., 20e) de radiotéléphonie, des moyens d'émettre, à destination de chaque terminal (20a, ..., 20e) partageant le même abonnement, les données définissant les créneaux horaires qui lui ont été attribués et une mémoire (11) permettant l'enregistrement de créneaux horaires attribués à chaque terminal (20a, ..., 20e), et le serveur applicatif (4) comprenant au moins des moyens informatiques (40) permettant la gestion de données émises par chaque terminal (20a, ..., 20e) et une mémoire (41) permettant l'enregistrement de ces données.

14. Système selon la revendication 13, **caractérisé en ce que** le serveur de synchronisation (1) est confondu avec le serveur applicatif (4).

15. Système selon une des revendications 13 ou 14, **caractérisé en ce que** chaque terminal (20a, ..., 20e) comprend des moyens d'émission de données mémorisées dans une mémoire dudit terminal (20a, ..., 20e), représentant des grandeurs physiques mesurées à intervalles déterminés par des moyens de mesure (21a, ..., 21e) reliés audit terminal, ainsi que des moyens d'émission d'une date et d'une heure.

16. Système selon une des revendications 13 à 15, **caractérisé en ce que** tous les terminaux (20a, ..., 20e) ont une carte SIM identique.

17. Système selon une des revendications 13 à 16, **caractérisé en ce que** chaque terminal (20a, ..., 20e) est connectable à un système de synchronisation de type GPS.

## Claims

1. Method of sharing a subscription between a plurality of terminals (20a, ..., 20e) equipped with wireless telephone means, **characterised in that** it comprises a first step of sharing out, by a manager, of a time for access to a wireless telephone network within the context of the subscription in time slots, and in allocation by the manager of specific time slots to each terminal (20a, ..., 20e), wherein the time slots allocated to the different terminals (20a, ..., 20e) do not overlap, a second step of transmission (53a, 53b) are transmitted from one or more synchronisation servers (1) to each terminal (20a, ..., 20e) of time slots specific to each terminal (20a, ..., 20e), and a third step of storage of the specific time slots in a memory of each terminal (20a, ..., 20e) to which the said time slots have been allocated.

2. Method as claimed in Claim 1, **characterised in that** the memory of each terminal (20a, ..., 20e) is a SIM card.

3. Method as claimed in either Claim 1 or Claim 2, **characterised in that** it comprises a step of synchronisation (52a, 52b) at defined intervals of the clock of each terminal (20a, ..., 20e) with that of the servers (1) for synchronisation and storage of the clock data in the memory of the terminal (20a, ..., 20e).

4. Method as claimed in Claim 3, **characterised in that** the step of synchronisation (52a, 52b) consists of the transmission from one or more synchronisation servers (1) to each terminal (20a, ..., 20e) of a synchronisation message containing the clock date and time of the synchronisation server or servers (1), then a step of processing of this message by the circuits of each terminal (20a, ..., 20e) and the program in order to update the clock of each terminal (20a, ..., 20e).

5. Method as claimed in Claim 3, **characterised in that** the step of synchronisation (52a, 52b) consists of updating the clocks of the synchronisation servers (1) and of each terminal (20a, ..., 20e) from GPS systems connected to the synchronisation servers (1) and to each terminal (20a, ..., 20e).

6. Method as claimed in any one of Claims 1 to 5, **characterised in that** it comprises a step of connection (51a, 51b) of each terminal (20a, ..., 20e) to the wireless telephone network, triggered by a monitoring programme portion of each terminal (20a, ..., 20e), when the said terminal (20a, ..., 20e) is in a time slot which is allocated to it.

7. Method as claimed in Claim 6, **characterised in that** it comprises a step of disconnection (56a, 56b) of each terminal (20a, ..., 20e) from the wireless telephone network at the end of the time slot which is allocated to it, triggered by a monitoring program portion of each terminal (20a, ..., 20e).

8. Method as claimed in any one of Claims 3 to 7, **characterised in that** it comprises a step of transmission of data (54, 55), via the wireless telephone network, from each terminal (20a, ..., 20e) to one or more application servers (4), when the said terminal (20a, ..., 20e) is in a time slot where it is connected to the wireless telephone network, the data containing the data on the clock and on the physical quantities, measured or input at predetermined intervals using measurement or input means (21a, ..., 2 1 e).

9. Method as claimed in either Claim 7 or Claim 8, **characterised in that** it comprises a step of synchronisation of each application server (4) with the synchronisation servers (1) by sending a synchronisation message from the synchronisation servers (1) to each application server (4).

10. Method as claimed in any one of Claims 7 to 9, **characterised in that** it comprises a step of contact (54) of each terminal (20a, ..., 20e) by at least one synchronisation server (1) or one application server (4) in the time slot which is allocated to the said terminal (20a, ..., 20e), consisting of the transmission of a message comprising new time slots and/or new synchronisation information, or enabling the activation of the data exchange between the said terminal and the application server (4).

11. Method as claimed in either Claim 6 or Claim 7, **characterised in that** it comprises, when a terminal (20a, ..., 20e) is in a time slot where it is connected to the wireless telephone network, a step of requesting a time of data transmission by the said terminal to at least one synchronisation server (1), followed by a step of allocation of a transmission time to the said terminal by the synchronisation server (1) in order to exchange data with at least one application server (4), the data transmission time using a second subscription.

12. Method as claimed in any one of Claims 6 or 7, **characterised in that** it comprises, when a terminal (20a, ..., 20e) is in a time slot where it is connected to the wireless telephone network, a step of allocation of an obligatory data transmission time by at least one synchronisation server (1) to the said terminal in order that the said terminal exchanges data with at least one application server (4).

13. System which enables implementation of the method according to the invention, **characterised in** it comprises at least one synchronisation server (1) and one application server (4), the synchronisation server (1) being connected to a wireless telephone network and comprising at least computing means (10) enabling the management and the definition of a period of access to a wireless telephone network by a plurality of wireless telephone terminals (20a, ..., 20e), means for transmission, to each terminal (20a, ..., 20e) sharing in the same subscription, of data defining the time slots which have been allocated to it, and a memory (11) enabling the recording of time slots allocated to each terminal (20a, ..., 20e), and the application server (4) comprising at least computing means (40) enabling the management of data transmitted by each terminal (20a, ..., 20e) and a memory enabling the recording of these data.

14. System as claimed in Claim 13, **characterised in that** the synchronisation server (1) is merged with the application server (4).

15. System as claimed in either Claim 13 or Claim 14, **characterised in that** each terminal (20a, ..., 20e) comprises means for transmission of data stored in a memory of the said terminal (20a, ..., 20e), representing physical quantities measured at defined intervals by measurement means (21a, ..., 21e) connected to the said terminal, as well as means for transmission of a date and a time.

16. System as claimed in any one of Claims 13 to 15, **characterised in that** all the terminals (20a, ..., 20e) have an identical SIM card.

17. System as claimed in any one of Claims 13 to 16, **characterised in that** each terminal (20a, ..., 20e) can be connected to a GPS-type synchronisation system.

## Patentansprüche

1. Verfahren zum Teilen eines Abonnements zwischen einer Mehrzahl von Endgeräten (20a, ..., 20e), die mit Mobilfunkmitteln ausgestattet sind, **dadurch gekennzeichnet, dass** es aufweist: einen ersten Schritt des Teilens einer Zeitspanne für einen Zugriff auf ein Mobilfunknetz im Rahmen des Abonnements in Zeitschlitze durch einen Betreiber, und des Zuweisens von spezifischen Zeitschlitzen an jedes Endgerät (20a, ..., 20e) durch den Betreiber, wobei die Zeitschlitze, die den verschiedenen Endgeräten (20a, ..., 20e) zugewiesen werden, einander nicht überlagern, einen zweiten Schritt des Sendens (53a, 53b) der für jedes Endgerät (20a, ..., 20e) spezifischen Zeitschlitze von einem oder mehreren Synchronisierungsservern (1) an jedes Endgerät (20a, ..., 20e), und einen dritten Schritt des Speicherns der spezifischen Zeitschlitze in einem Speicher jedes Endgerätes (20a, ..., 20e), dem die Zeitschlitze zugewiesen wurden.

2. Verfahren gemäß Anspruch 1, **dadurch gekennzeichnet, dass** der Speicher von jedem Endgerät (20a, ..., 20e) eine SIM-Karte ist.

3. Verfahren gemäß einem der Ansprüche 1 oder 2, **dadurch gekennzeichnet, dass** es aufweist: einen Schritt des Synchronisierens (52a, 52b) des Taktes jedes Endgerätes (20a, ..., 20e) mit demjenigen der Synchronisierungsserver (1) in definierten Zeitintervallen und des Speicherns der Taktdaten in dem Speicher des Endgerätes (20a, ..., 20e).

4. Verfahren gemäß Anspruch 3, **dadurch gekennzeichnet, dass** der Schritt des Synchronisierens (52a, 52b) aus dem Senden einer Synchronisierungsnachricht, die das Datum und die Uhrzeit des Taktes des oder der Synchronisierungsserver (1) enthält, von einem oder mehreren Synchronisierungsservern (1) an jedes Endgerät (20a, ..., 20e), und anschließend aus einem Schritt des Verarbeitens der Nachricht durch die Schaltkreise jedes Endgerätes (20a, ..., 20e) und durch das Programm zum Aktualisieren des Taktes jedes Endgerätes (20a, ..., 20e) besteht.

5. Verfahren gemäß Anspruch 3, **dadurch gekennzeichnet, dass** der Schritt des Synchronisierens (52a, 52b) aus dem Aktualisieren der Takte der Synchronisierungsserver (1) und jedes Endgerätes (20a, ..., 20e) ausgehend von GPS-Systemen besteht, die mit den Synchronisierungsservern (1) und mit jedem Endgerät (20a, ..., 20e) verbunden sind.

6. Verfahren gemäß einem der Ansprüche 1 bis 5, **dadurch gekennzeichnet, dass** es einen Schritt des Verbindens (51a, 51b) jedes Endgerätes (20a, ..., 20e) mit dem Mobilfunknetz aufweist, wobei dieser von einem Überwachungsprogrammabschnitt jedes Endgerätes (20a, ..., 20e) ausgelöst wird, wenn sich das Endgerät (20a, ..., 20e) in einem Zeitschlitz befindet, der ihm zugeordnet ist.

7. Verfahren gemäß Anspruch 6, **dadurch gekennzeichnet, dass** es einen Schritt des Unterbrechens der Verbindung (56a, 56b) jedes Endgerätes (20a, ..., 20e) mit dem Mobilfunknetz am Ende des ihm zugewiesenen Zeitschlitzes aufweist, wobei dieser durch einen Überwachungsprogrammabschnitt jedes Endgerätes (20a, ..., 20e) ausgelöst wird.

8. Verfahren gemäß einem der Ansprüche 3 bis 7, **dadurch gekennzeichnet, dass** es einen Schritt zur Übertragung von Daten (54, 55) mittels des Mobilfunknetzes von jedem Endgerät (20a, ..., 20e) an einen oder mehrere Anwendungsserver (4) aufweist, wenn sich das Endgerät (20a, ..., 20e) in einem Zeitschlitz befindet, in welchem es mit dem Mobilfunknetz verbunden ist, wobei die Daten die Daten des Taktes und physikalische Größen enthalten, die in bestimmten Intervallen von Mitteln zum Messen oder Einführen (21a, ..., 21e) gemessen oder eingeführt werden.

9. Verfahren gemäß einem der Ansprüche 7 oder 8, **dadurch gekennzeichnet, dass** es einen Schritt des Synchronisierens jedes Anwendungsservers (4) mit den Synchronisierungsservern (1) mit Hilfe des Sendens einer Synchronisierungsnachricht von den Synchronisierungsservern (1) an jeden Anwendungsserver (4) aufweist.

10. Verfahren gemäß einem der Ansprüche 7 bis 9, **dadurch gekennzeichnet, dass** es einen Schritt (54) des Kontaktierens (54) jedes Endgerätes (20a, ..., 20e) durch mindestens einen Synchronisierungsserver (1) oder einen Anwendungsserver (4) in dem Zeitschlitz, der dem Endgerät (20a, ..., 20e) zugewiesen ist, aufweist, wobei dieser aus dem Senden einer Nachricht besteht, die neue Zeitschlitze und/oder eine neue Synchronisierungsinformation enthält oder das Aktivieren des Austauschens von Daten zwischen dem Endgerät und dem Anwendungsserver (4) ermöglicht.

11. Verfahren gemäß einem der Ansprüche 6 oder 7, **dadurch gekennzeichnet, dass** es, wenn sich ein Endgerät (20a, ..., 20e) in einem Zeitschlitz befindet, in dem es mit dem Mobilfunknetz verbunden ist, aufweist: einen Schritt des Anfragens von Zeit zum Senden von Daten durch das Endgerät an mindestens einen Synchronisierungsserver (1), gefolgt von einem Schritt des Zuweisens einer Sendezeit an das Endgerät durch den Synchronisierungsserver (1) zum Austauschen von Daten mit mindestens einem Anwendungsserver (4), wobei die Zeit zum Senden von Daten ein zweites Abonnement nutzt.

12. Verfahren gemäß einem der Ansprüche 6 oder 7, **dadurch gekennzeichnet, dass** es, wenn sich ein Endgerät (20a, ..., 20e) in einem Zeitschlitz befindet, in dem es mit dem Mobilfunknetz verbunden ist, einen Schritt des Zuweisens einer obligatorischen Zeit für das Senden von Daten durch mindestens einen Synchronisierungsserver (1) an das Endgerät aufweist, damit das Endgerät Daten mit mindestens einem Anwendungsserver (4) austauscht.

13. System, welches das Durchführen des Verfahrens gemäß der Erfindung ermöglicht, **dadurch gekennzeichnet, dass** es mindestens einen Synchronisierungssever (1) und einen Anwendungsserver (4) aufweist, wobei der Synchronisierungsserver (1) mit einem Mobilfunknetz verbunden ist und aufweist: mindestens Computermittel (10), die das Verwalten und das Definieren einer Zeitspanne für einen Zugriff.auf ein Mobilfunknetz durch einen Mehrzahl von Mobilfunk-Endgeräten (20a, ..., 20e) ermöglichen, Mittel zum Senden der Daten an jedes dasselbe Abonnement teilende Endgerät (20a, ..., 20e), die die Zeitschlitze definieren, die ihm zugewiesen wurden, und einen Speicher (11), der das Speichern von Zeitschlitzen, die jedem Endgerät (20a, ..., 20e) zugeordnet wurden, ermöglicht, und wobei der Anwendungsserver (4) aufweist: mindestens Computermittel (40), die das Verwalten von Daten ermöglichen, die von jedem Endgerät (20a, ..., 20e) ausgesendet wurden, und einen Speicher (41), der das Speichern dieser Daten ermöglicht.

14. System gemäß Anspruch 13, **dadurch gekennzeichnet, dass** der Synchronisierungsserver (1) mit dem Anwendungsserver (4) vereint ist.

15. System gemäß einem der Ansprüche 13 oder 14, **dadurch gekennzeichnet, dass** jedes Endgerät (20a, ..., 20e) aufweist: Mittel zum Senden von Daten, die in einem Speicher des Endgerätes (20a, ..., 20e) gespeichert sind, die physikalische Größen repräsentieren, die in bestimmten Intervallen von Messmitteln (21a, ..., 21e) gemessen werden, die mit dem Endgerät verbunden sind, sowie Mittel zum Senden eines Datums und einer Uhrzeit.

16. System gemäß einem der Ansprüche 13 bis 15, **dadurch gekennzeichnet, dass** alle Endgeräte (20a, ..., 20e) eine identische SIM-Karte aufweisen.

17. System gemäß einem der Ansprüche 13 bis 16, **dadurch gekennzeichnet, dass** jedes Endgerät (20a, ..., 20e) mit einem Synchronisierungssystem des GPS-Typs verbindbar ist.
